# EUROPEAN PATENT APPLICATION

(11) **EP 3 211 562 A1**
(43) Date of publication of application: **30.08.2017**
(21) Application number: 16157582.4
(22) Date of filing: 26.02.2016
(51) Int. Cl.: G06K 9/00

(54) **CREATING SUMMARY CONTENT**

(71) Applicant: Nokia Technologies Oy, 02610 Espoo (FI)
(72) Inventor: HOLM, Jukka, 33270 Tampere (FI); LEHTINIEMI, Arto, 33880 Lempäälä (FI); ERONEN, Antti, 33820 Tampere (FI)
(74) Representative: Nokia Corporation

(57) **Abstract**

This specification describes a method comprising receiving panoramic video content comprising at least a first object and a second object, detecting the first object and the second object in the received panoramic video content, selecting a first crop region in the received panoramic video content based on an assigned relevance indicator, the relevance indicator being indicative of a relevance of a respective object to a user; and cropping the received panoramic video content using the first crop region to create summary content. An apparatus and computer program are also described.

## Description

### Field

This specification relates to a method of creating summary content from received panoramic video content. Specifically, this specification relates to a method of creating a summary video that may be displayed at a mobile device.

### Background

The modern communications era has brought about a tremendous expansion of wireless networks. Computer networks, television networks, and telephone networks are experiencing an unprecedented technological expansion, fuelled by consumer demand. Wireless and mobile networking technologies have addressed related consumer demands, while providing more flexibility and immediacy of information transfer. Current and future networking technologies continue to facilitate ease of information transfer and convenience to users. One area in which there is a trend to increase ease of information transfer relates to the delivery of panoramic video content, such as panoramic or 360 degrees videos, to a user of a mobile terminal, such as a mobile telephone or a mobile television etc.

### Summary

In a first aspect, this specification describes a method comprising receiving panoramic video content comprising at least a first object and a second object; detecting the first object and the second object in the received panoramic video content; selecting a first crop region in the received panoramic video content based on an assigned relevance indicator, the relevance indicator being indicative of a relevance of a respective object to a user; and cropping the received panoramic video content using the first crop region to create summary content.

The first object may be a person, and detecting the first object may comprise identifying a person using facial recognition.

The first crop region may be selected based on an assigned relevance indicator such that the first crop region includes at least part of the object of the highest relevance.

The first object may be a person and the second object may be a person, and detecting the first object and the second object may comprise identifying a person using facial recognition.

Relevance indicator of a respective object may be assigned based on at least one of: a relationship of the person to the user and an online presence status of the person on a social networking/media system.

The first crop region may comprise an aspect ratio matching a mobile device.

The method may further comprise the steps of: calculating a distance between the first object and the second object in the received panoramic video content; determining whether it is possible to include the first object and the second object in the first crop region based on the distance between the first object and the second object; wherein if it is possible to include both objects in the first crop region, the selecting of the first crop region comprises selecting the first crop region including both objects; and if it is not possible to include both objects in the first crop region, the selecting of the first crop region comprises selecting the first crop region including the object having a higher relevance.

The method may further comprise: wherein if it is not possible to include both objects in the first crop region, selecting a second crop region including the object having a lower relevance, and cropping the received content first using the first region and then the second crop region, so as to create the summary content.

The received panoramic video content may comprise a third object, and the method may further comprise detecting the third object in the received panoramic video content.

The method may further comprise determining a pan direction based on relevance indicators assigned to the first, second, and third objects, wherein the cropping of the received content comprises moving the first crop region in the determined pan direction to create the summary content.

The method may further comprise: setting a duration of the summary content prior to selecting the first crop region; determining whether it is possible to include all detected objects in the received panoramic video content in a single crop region; and if it is possible to include all detected objects in a single crop region, select the first crop region in the received panoramic video content including all detected objects; if it is not possible to include all detected objects in a single crop region, select the first crop region in the received panoramic video content including the object of the highest relevance, select a second crop region in the received panoramic video content including the object of the second highest relevance, and cropping the received panoramic video content using the first crop region and then the second crop region to create the summary content.

The method may further comprise: determining that at least one of the objects included in the received panoramic video content is a blocked object; wherein the first crop region is selected such that it does not include the blocked object.

The method may further comprise displaying the summary content at a mobile device.

The method may further comprise: receiving textual content relating to at least one of the objects included in the received panoramic video content; wherein displaying the summary video further comprises displaying the text content relating to the at least one of the objects when the object is displayed.

In a second aspect, this specification describes apparatus configured to perform a method according to the first aspect.

In a third aspect, this specification describes computer-readable instructions which when executed by computing apparatus cause the computing apparatus to perform a method according to the first aspect.

In a fourth aspect, this specification describes apparatus comprising: at least one processor and at least one memory including computer program code, which when executed by the at least one processor, causes the apparatus: to receive panoramic video content comprising at least a first object and a second object; to detect the first object and the second object in the received panoramic video content; to select a first crop region in the received panoramic video content based on an assigned relevance indicator, the relevance indicator being indicative of a relevance of a respective object to a user; and to crop the received panoramic video content using the first crop region to create summary content.

The first object may be a person and the second object may be a person, and the computer program code, when executed by the at least one processor, may cause the apparatus: to detect the first object and the second object by identifying a person using facial recognition.

The computer program code, when executed by the at least one processor, may cause the apparatus: to calculate a distance between the first object and the second object in the received panoramic video content; to determine whether it is possible to include the first object and the second object in the first crop region based on the distance between the first object and the second object; wherein if it is possible to include both objects in the first crop region, the selecting of the first crop region comprises selecting the first crop region including both objects; and if it is not possible to include both objects in the first crop region, the selecting of the first crop region comprises selecting the first crop region including the object having a higher relevance.

The computer program code, when executed by the at least one processor, may cause the apparatus: wherein if it is not possible to include both objects in the first crop region, to select a second crop region including the object having a lower relevance, and to crop the received content first using the first region and then the second crop region, so as to create the summary content.

The received panoramic video content may comprise a third object, and the computer program code, when executed by the at least one processor, may cause the apparatus to detect the third object in the received panoramic video content.

The computer program code, when executed by the at least one processor, may cause the apparatus: to determine a pan direction based on relevance indicators assigned to the first, second, and third objects, wherein the cropping of the received content comprises moving the first crop region in the determined pan direction to create the summary content.

The computer program code, when executed by the at least one processor, may cause the apparatus: to set a duration of the summary content prior to selecting the first crop region; to determine whether it is possible to include all detected objects in the received panoramic video content in a single crop region; and if it is possible to include all detected objects in a single crop region, to select the first crop region in the received panoramic video content including all detected objects; if it is not possible to include all detected objects in a single crop region, to select the first crop region in the received panoramic video content including the object of the highest relevance, to select a second crop region in the received panoramic video content including the object of the second highest relevance, and to crop the received panoramic video content using the first crop region and then the second crop region to create the summary content.

The computer program code, when executed by the at least one processor, may cause the apparatus to determine that at least one of the objects included in the received panoramic video content is a blocked object; wherein the first crop region is selected such that it does not include the blocked object.

The computer program code, when executed by the at least one processor, may cause the apparatus to display the summary content at a mobile device.

The computer program code, when executed by the at least one processor, may cause the apparatus: to receive textual content relating to at least one of the objects included in the received panoramic video content; wherein displaying the summary video further comprises displaying the text content relating to the at least one of the objects when the object is displayed.

In a fifth aspect, this specification describes a computer-readable medium having computer-readable code stored thereon, the computer readable code, when executed by at least one processor, may cause performance of at least: receiving panoramic video content comprising at least a first object and a second object; detecting the first object and the second object in the received panoramic video content; selecting a first crop region in the received panoramic video content based on an assigned relevance indicator, the relevance indicator being indicative of a relevance of a respective object to a user; and cropping the received panoramic video content using the first crop region to create summary content.
In a sixth aspect, this specification describes apparatus comprising: means for receiving panoramic video content comprising at least a first object and a second object; means for detecting the first object and the second object in the received panoramic video content; means for selecting a first crop region in the received panoramic video content based on an assigned relevance indicator, the relevance indicator being indicative of a relevance of a respective object to a user; and means for cropping the received panoramic video content using the first crop region to create summary content.

The apparatus may further comprise means to perform a method according to the first aspect.

In a seventh aspect, this specification describes a method comprising: receiving panoramic video content comprising at least a first object; detecting the first object in the received panoramic video content; selecting a first crop region in the received panoramic video content based on an assigned relevance indicator, the relevance indicator being indicative of a relevance of the first object to a user; and cropping the received panoramic video content using the first crop region to create summary content.

The first object may be a person, and detecting the first object comprises identifying a person using facial recognition.

Relevance indicator of the first object may be assigned based on at least one of: a relationship of the person to the user and an online presence status of the person on a social networking/media system.

In an eight aspect, this specification describes apparatus configured to perform a method according to the seventh aspect.

In a ninth aspect, this specification describes computer-readable instructions which when executed by computing apparatus cause the computing apparatus to perform a method according to the seventh aspect.

In a tenth aspect, this specification describes apparatus comprising: at least one processor and at least one memory including computer program code, which when executed by the at least one processor, causes the apparatus: to receive panoramic video content comprising at least a first object; to detect the first object in the received panoramic video content; to select a first crop region in the received panoramic video content based on an assigned relevance indicator, the relevance indicator being indicative of a relevance of the first object to a user; and to crop the received panoramic video content using the first crop region to create summary content.

In an eleventh aspect, this specification describes a computer-readable medium having computer-readable code stored thereon, the computer readable code, when executed by at least one processor, may cause performance of at least: receiving panoramic video content comprising at least a first object; detecting the first object in the received panoramic video content; selecting a first crop region in the received panoramic video content based on an assigned relevance indicator, the relevance indicator being indicative of a relevance of the first object to a user; and cropping the received panoramic video content using the first crop region to create summary content.

In a twelfth aspect, this specification describes apparatus comprising: means for receiving panoramic video content comprising at least a first object; means for detecting the first object in the received panoramic video content; means for selecting a first crop region in the received panoramic video content based on an assigned relevance indicator, the relevance indicator being indicative of a relevance of the first object to a user; and means for cropping the received panoramic video content using the first crop region to create summary content.

### Brief Description of the Drawings

For a more complete understanding of the methods, apparatuses, and computer-readable instructions described herein, references are now made to the following descriptions taken in connection with the accompanying drawings in which:
Figure 1 is a schematic view of a frame of original panoramic video content;
Figure 2 is a schematic view of the frame in Figure 1 in which a first crop region is selected;
Figure 3 shows a mobile device at which summary content created using the first crop region in Figure 1 is displayed;
Figure 4 is another schematic view of a frame of panoramic video content;
Figure 5 is another schematic view of a frame of panoramic video content;
Figure 6 is another schematic view of a frame of panoramic video content;
Figure 7 is another schematic view of a frame of panoramic video content;
Figure 8 is another schematic view of a frame of panoramic video content;
Figure 9 is another schematic view of a frame of panoramic video content;
Figure 10 is another schematic view of a frame of panoramic video content;
Figure 11 is another schematic view of a frame of panoramic video content;
Figure 12 is a block diagram of a system operable to create summary content from received panoramic video content;
Figure 13 is a flow chart illustrating various operations which may be performed by the system of Figure 12;
Figure 14 is another flow chart illustrating various operations which may be performed by the system of Figure 12;
Figure 15 shows a computer readable storage medium.

### Detailed Description

Typically, panoramic video content, such as panoramic or 360 degrees videos, is displayed using sophisticated output devices, such as a headset including a screen in front of each eye to provide the user with an illusion that he or she is located in the virtual reality world of the panoramic video.

Examples described herein provide for an intuitive method of creating a summary of panoramic video content. This may be useful when viewing the video content using a mobile device that may not necessarily have the capability to view panoramic videos or other types of virtual reality content. Examples described herein may also allow functionalities such as quick viewing and online sharing of a captured summary of panoramic video content in an effective way. As described below, the examples may reduce the amount of superfluous visual information presented.

Virtual reality may allow users to see, move through, and interact with information displayed as a three-dimensional world. Virtual reality is sometimes used to model real world objects. For example, virtual reality may be used to create software applications that let architects "view" interiors of buildings and then enable a disabled person to "move" through the building to see if the design is satisfactory. Virtual reality may also sometimes be used to implement games that allow a user to play-act within a virtual reality world, to enable a pilot to simulate flying an aircraft, to allow a surgeon to simulate a difficult operation and to allow a user to simulate visiting an art museum.

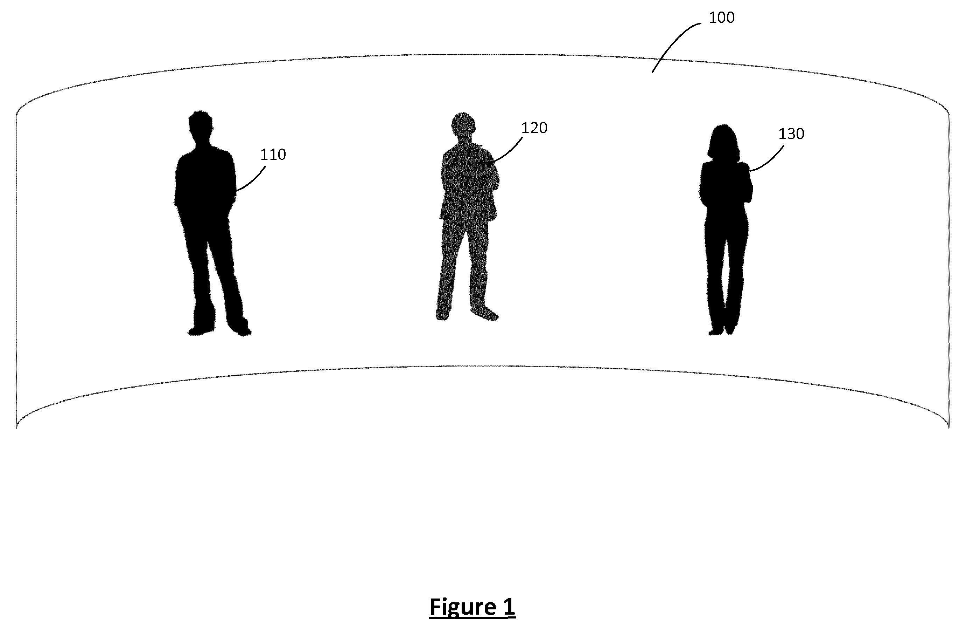

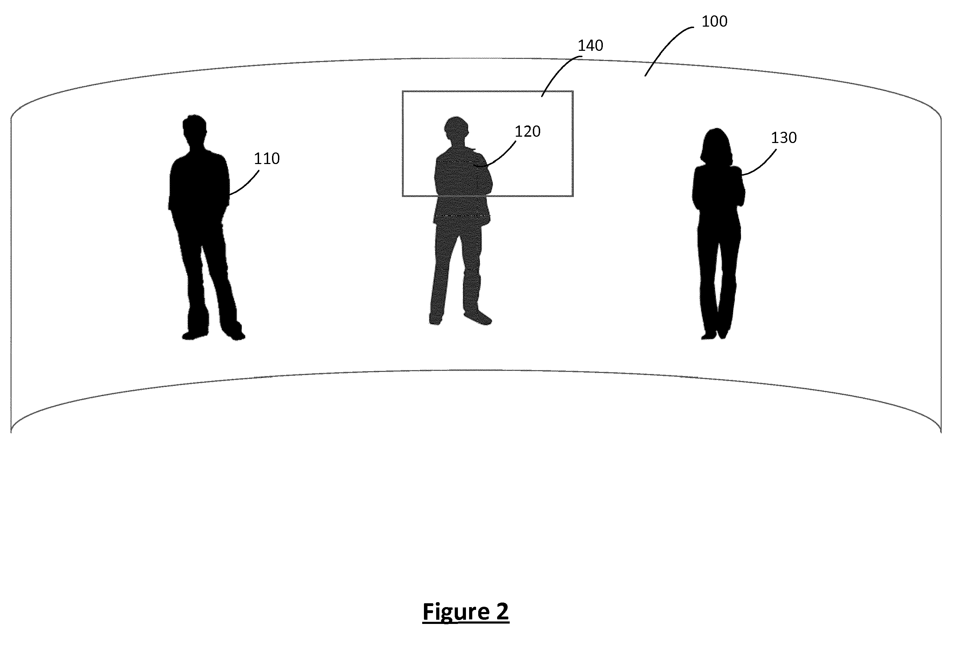

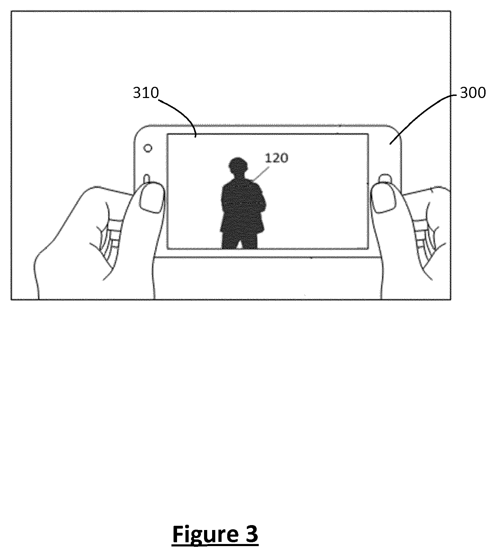

According to an example embodiment, in Figure 1, there is an example schematic view of a frame of panoramic video content, Figure 2 is an example schematic view of the frame in Figure 1 in which a first crop region is selected, and Figure 3 shows an example of a mobile device at which summary content created using the first crop region is displayed.

According to an example embodiment, in Figure 1, there is a provided an area 100 where panoramic video content may be displayed in a mobile device. The panoramic video content may be received from panoramic video content generator which is arranged to generate panoramic video content using a computer processor and specialised graphics hardware. For example, the panoramic video content may be downloaded from an external server on which the panoramic video content generator is located. The panoramic video content may be generated from real videos captured, for example, using a multi camera device. The videos taken by each camera in the device may be stitched together, or otherwise combined, to form the panoramic video content.

The particular frame displayed at the area 100 includes a first object 110, a second object 120, and a third object 130. In this illustrated example, the first object 110, the second object 120, and the third object 130 are three persons that may have a personal relationship with a user of the mobile device. For example, each of the first object 110, the second object 120, and the third object 130 may be friends of a user. Since the first object 110, the second object 120, and the third object 130 are people, and their faces are shown in the area 100, it may be possible to detect and recognise at least one of the first object 110, the second object 120, and the third object 130 using visual and depth analysis techniques and/or facial recognition techniques.

According to an example embodiment, in Figure 2, a first crop region 140 within the area 100 is selected. The first crop region 140 in this illustrated example is a rectangular frame comprising an aspect ratio and a resolution matching a display of a mobile device. For example, the first crop region in this illustrated example may have an aspect ratio of 4:3 and a resolution of 320*240. The first crop region may be a spatiotemporal crop region which may be changed or adjusted in a space and time dependent manner.

According to an example embodiment, in Figure 2, the first crop region 140 is selected around a part of the second object 120. Specifically, the first crop region 140 is selected so as to include a top part of the second object 120, such that a face of the person represented as the second object 120 is included. This first crop region 140 is used for cropping the received panoramic video content so as to create summary content.

Specifically, the panoramic video content is cropped using the first crop region such that the resulting summary content has an aspect ratio of 4:3 and a resolution of 320*240, matching those of the display of the mobile device. The summary content may be a summary video which may be transmitted, for example via wireless technology such as Bluetooth, to a mobile device. This is illustrated in Figure 3 which shows a mobile device 300 of the user having a screen 310 at which the summary video is displayed, showing a top part of the second object 120.

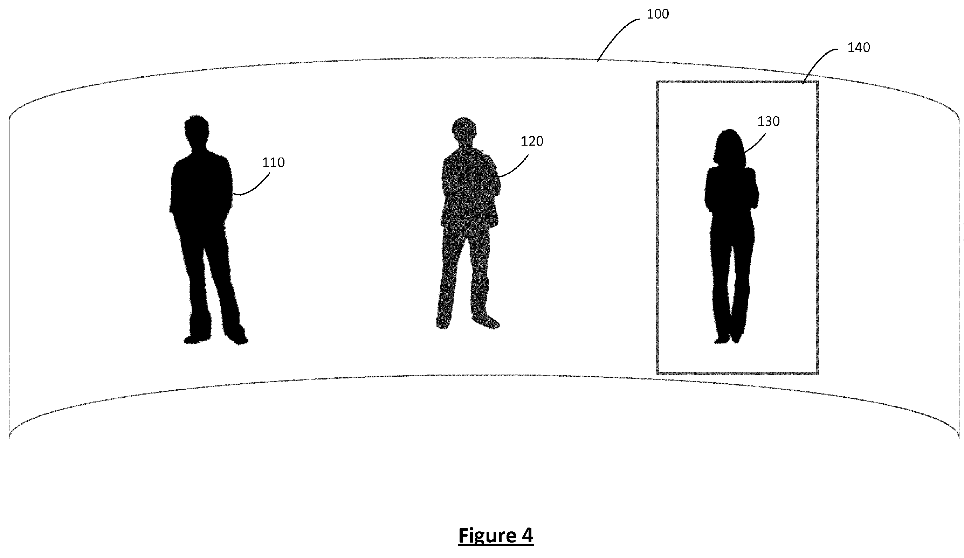

According to an example embodiment, in Figure 4, there is another example schematic view of a frame of panoramic video content. Similar to what is shown in Figure 1, in the Figure 4 there is a provided an area 100 where panoramic video content is displayed. The panoramic video content may be received from a virtual reality content generator, as previously described. Moreover, in the example embodiment shown in Figure 4, the panoramic video content, in this particular frame display at the area 100, also includes a first object 110, a second object 120, and a third object 130.

The first crop region 140 in this illustrated example is a rectangular frame comprising an aspect ratio and a resolution matching a display of a mobile device. For example, the first crop region in this illustrated example may have an aspect ratio of 4:3 and a resolution of 320*240. The first crop region may be a spatiotemporal crop region which may be changed or adjusted in a space and time dependent manner. Compared to the first crop region illustrated in the exemplary embodiment of Figure 2, which is in a landscape orientation, in the embodiment of Figure 4 the first crop region is in a portrait orientation.

As shown in Figure 4, the first crop region 140 is selected around the third object 130. Specifically, the first crop region 140 is selected so as to include a whole of the third object 130. This first crop region 140 is used for cropping the received panoramic video content so as to create summary content.

Specifically, the panoramic video content is cropped using the first crop region such that the resulting summary content has an aspect ratio of 4:3 and a resolution of 320*240, matching those of the display of the mobile device. In this embodiment, during the cropping operation for creating summary content, the first crop region 140 may remain in the same position throughout, while the panoramic video content may be shifted and/or rotated temporally with respect to the first crop region 140. The resulting summary content of this cropping operation may be displayed as if the user of the mobile device 300 is viewing a "cropped" panoramic video content through a viewing aperture.

In fact, in this particular embodiment, the first crop region may be considered as a "viewing region" through which a desired portion of the panoramic video content may be displayed in a resulting summary content.

The summary content may be a summary video which may be transmitted, for example via wireless technology such as Bluetooth, to a mobile device. This is illustrated in Figure 3 which shows a mobile device 300 of the user having a screen 310 at which the summary video is displayed, showing a top part of the second object 120.

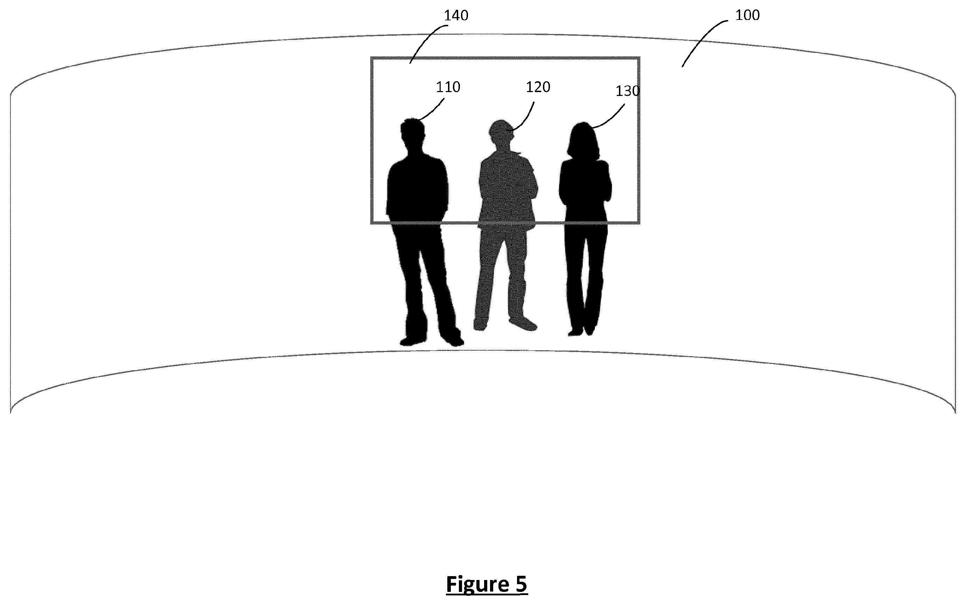

According to an example embodiment, in Figure 5, there is another example schematic view of a frame of panoramic video content. As shown in Figure 5, there is a provided an area 100 where panoramic video content is displayed. The panoramic video content may be received from a virtual reality content generator, as previously described. The particular frame displayed at the area 100 in this illustrated example includes a first object 110, a second object 120, and a third object 130, all of which are positioned proximate to each other, compared to that shown in Figure 1.

A first crop region 140 within the area 100 is selected. The first crop region 140 in this illustrated example is a rectangular frame comprising an aspect ratio and a resolution matching those of a display of a mobile device. A distance between the first object 110 and the second object 120, a distance between the first object 110 and the third object 130, and a distance between the second object 120 and the third object 130 are calculated. These calculated distances are compared against dimensions of a single crop region so as to determine whether it is possible to include all the objects in a single crop region, or whether it is possible to include at least two of the three objects in a single crop region.

In the present case, it has been determined that it is possible to include at least a portion of the first object 110, at least a portion of the second object 120, and at least a portion of the third object 130 in a single crop region. Therefore, as shown in Figure 5, the first crop region 140 in this illustrated example is selected so as to include at least a portion of all three objects no, 120, 130.

Specifically, the first crop region 140 is selected so as to include a top part of each of the first object 11, the second object 120, and the third object 130, such that faces of each person represented as the objects are included. This first crop region 140 is used for cropping the received panoramic video content so as to create summary content, e.g. a summary video, to be displayed at a display of a mobile device.

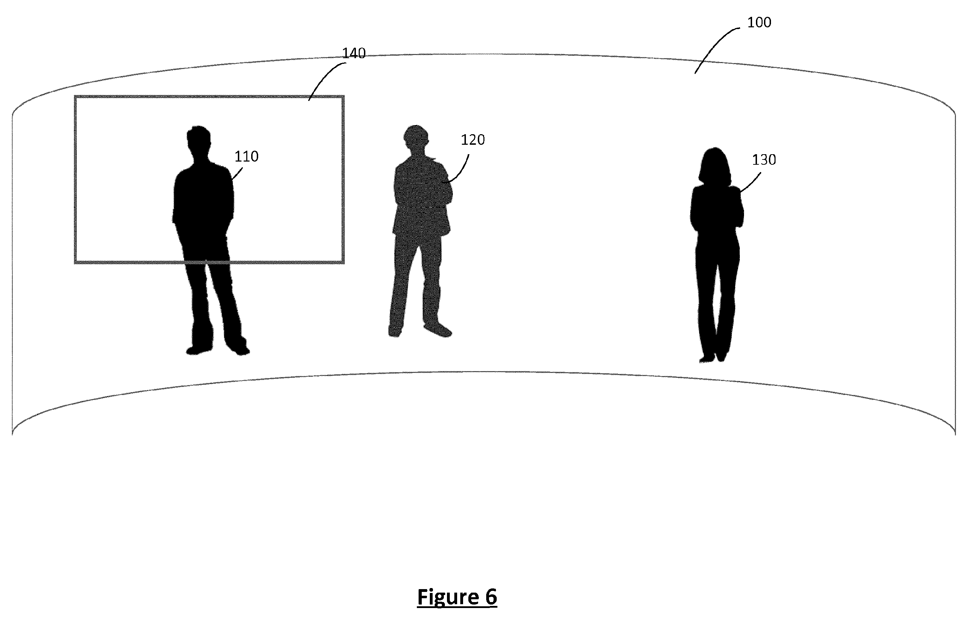

As will be explained in further detail in the following discussion, Figures 6 to 8 illustrate a number of different possible outcomes when it is determined that it is not possible to include all the detected objects in a single crop region.

According to an example embodiment, in Figure 6, there is another schematic view of a frame of panoramic video content, in which a first crop region is selected in received panoramic video content according to relevance indicators. Specifically Figure 6 illustrates a possible outcome if it is determined that it is not possible to include all detected objects of the received panoramic video content in a single crop region.

As shown in Figure 6, the detected objects, i.e. the first object 110, the second object 120, and the third object 130 may be spaced apart within the received panoramic video content in the area 100 such that it is not possible to include all three objects in a single crop region. As mentioned with relation to Figure 5, this may be determined by calculating a distance between the first object 110 and the second object 120, a distance between the first object 110 and the third object 130, and a distance between the second object 120 and the third object 130.

In this example relevance indicators are assigned to each of the detected objects in the received panoramic video content. The relevance indicators assigned to each of the detected objects may be determined, calculated, or retrieved based on a database containing identification information of a number of individuals who have personal relationships with the user. For example, the database may contain a plurality of entries each relating to a family member or friend of the user. The database may contain reference images or other visual features enabling recognition of an individual based on image analysis.

Relevance indicators are assigned in the format of relevance scores in this illustrated example. For the purpose of illustrating the feature of relevance score assignment, in this example the first object 110 has the closest personal relationship with the user, e.g. spouse of the user, and therefore is assigned a relevance score of 5 on a scale of 1 to 5, wherein a higher score indicates a closer relationship with the user of the mobile device. The second object 120 has a moderate personal relationship with the user, e.g. an acquaintance of the user, and therefore is assigned a relevance score of 2. The third object 130 has a closer personal relationship with the user, e.g. a close friend of the user, and therefore is assigned a relevance score of 3. The information relating to the personal relationship between a detected object and the user may be retrieved from a database, which will be explained in further detail in the following discussion.

The first crop region 140 may be selected based on an assigned relevance indicator, in this case, a relevance score. As shown in Figure 6, in this scenario a first crop region 140 is selected so as to only include an object having the highest relevance score, i.e. the first object 110. Specifically, the first crop region 140 is selected so as to include a top part of the first object 110, such that a face of the person represented as the first object 110 is included. This first crop region 140 is used for cropping the received panoramic video content so as to create summary content, such as a summary video, which may then be displayed on the display of a mobile device.

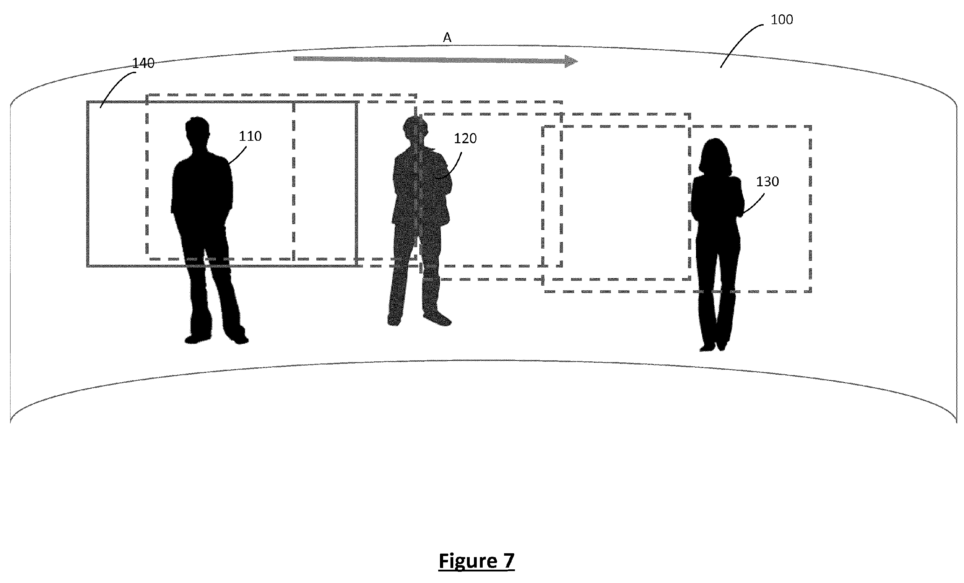

According to an example embodiment, in Figure 7, there is another schematic view of a frame of panoramic video content, in which a first crop region is selected in received panoramic video content and a pan direction based on relevance indicators is determined. Specifically Figure 7 illustrates an alternative or additional possible outcome if it is determined that it is not possible to include all detected objects of the received panoramic video content in a single crop region.

Similar to what is shown in Figure 6, the detected objects in Figure 7, i.e. the first object 110, the second object 120, and the third object 130 may be spaced apart within the received panoramic video content in the area 100 such that it may not be possible to include all three objects in a single crop region. As mentioned with relation to Figure 5, this is determined by calculating a distance between the first object 110 and the second object 120, a distance between the first object 110 and the third object 130, and a distance between the second object 120 and the third object 130.

In this example, relevance indicators, in the format of relevance scores, are also assigned to each of the detected objects in the received panoramic video content. It will be appreciated that other types of relevance indicator could alternatively be used. The relevance score assigned to each of the detected objects may be determined, calculated, or retrieved based on a database containing identification information of a number of individuals who have personal relationships with the user. In this scenario, the first object 110, the second object 120, and the third object 130 are respectively assigned with the relevance scores of 5, 2, and 3, wherein a higher score indicates a closer relationship with the user of the mobile device.

In this scenario, a first crop region 140 may be selected so as to only include an object of the highest relevance score, i.e. the first object 110. Specifically, the first crop region 140 is selected so as to include a top part of the first object 110, such that a face of the person represented as the first object 110 is included.

In addition, based on positions of each of the detected objects and the relevance indicators assigned to each of the detected objects, a pan direction of the selected first crop region 140 is determined.

As mentioned above, for example, the relevance scores assigned to the first object 110, the second object 120, and the third object 130 may be respectively 5, 2, and 3. In some cases, it would be preferable to determine a pan direction such that the first crop region 140 pans from the most relevance object to the least relevant object, i.e. from the object having the highest score to the object having the lowest score. In other words, in some cases it would be preferable for the first crop region 140 to pan from the first object 110 to the third object 130 and then to the second object 120. However, in the present case, since the second object 120 is positioned between the first object 110 and the third object 130, it would be preferable to select a pan direction to pan from the first object 110 to the second object 120 and then to the third object 130. Compared to the former method, this reduces the amount of panning of the first crop region 140 which in turn reduces the speed of panning, given a set duration for a resultant summary video.

The determined pan direction of the selected first crop region 140 is indicated by arrow A in Figure 7. This first crop region 140 and the determined pan direction are used for cropping the received panoramic video content so as to create summary content. In this illustrated example, summary content is created in the form of a summary video for playback at a mobile device.

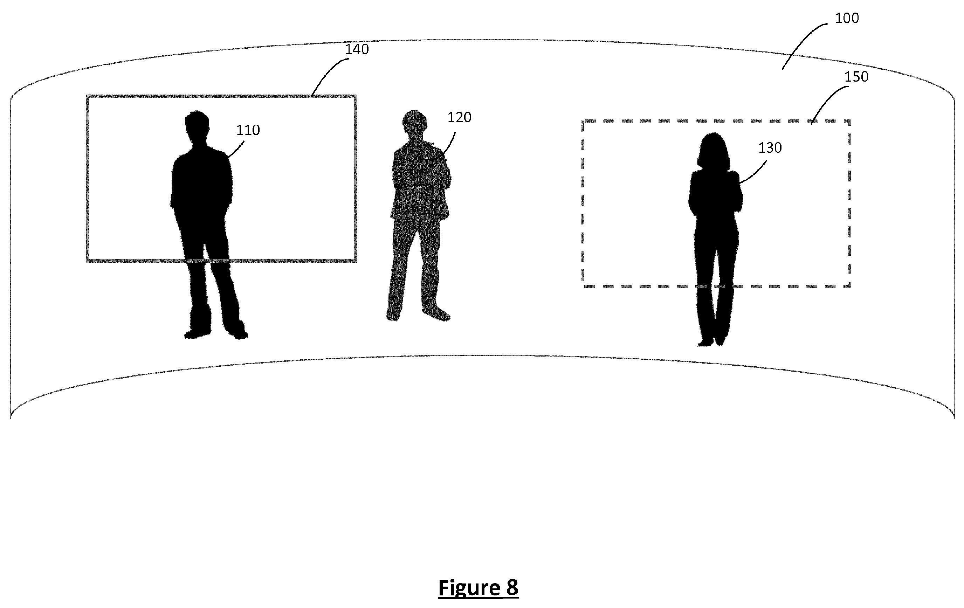

According to an example embodiment, in Figure 8, there is another schematic view of a frame of panoramic video content, in which a first crop region and a second crop region are selected in received panoramic video content. Specifically Figure 8 illustrates an alternative or additional possible outcome if it is determined that it is not possible to include all detected objects of the received panoramic video content in a single crop region. In some cases, a second crop region is selected, in addition to a first crop region, if it is determined that a pre-set duration of the resultant summary content is not long enough to allow panning of a first crop region across all detected objects desired for display in the summary content.

Similar to what is shown in Figures 6 and 7, the detected objects shown in Figure 8, i.e. the first object 110, the second object 120, and the third object 130 are spaced apart within the received panoramic video content in the area 100 such that it may not be possible to include all three objects in a single crop region.

In this illustrated example, relevance indicators are also assigned, in the form of relevance scores, to each of the detected objects in the received panoramic video content. The relevance score assigned to each of the detected objects may be determined, calculated, or retrieved based on a database containing identification information of a number of individuals who have personal relationships with the user. In this scenario, the first object 110, the second object 120, and the third object 130 are respectively assigned with the relevance scores of 5, 2, and 3, wherein a higher score indicates a closer relationship with the user of the mobile device.

A first crop region 140 is selected based on at least one of the assigned relevance indicators. In this scenario, the first crop region 140 is selected so as to only include the most relevant object, namely in this example an object of the highest relevance score, i.e. the first object 110. Specifically, the first crop region 140 is selected so as to include a top part of the first object 110, such that a face of the person represented as the first object 110 is included. In addition, a second crop region 150 is selected so as to only include the second most relevant object, namely in this example an object of the second highest relevance score, i.e. the third object 130.

The selected first crop region 140 and second crop region 150 may then be used for cropping the received panoramic video content so as to create summary content in the form of a summary video. Specifically, the summary video may comprise of a first part created by cropping the received panoramic video content using the first crop region 140, and a second part created by cropping the received panoramic video content using the second crop region 150. The first part and second part of the summary content may be displayed consecutively, one after the other. For example, the transition between the first part and the second part of the summary video may include a fade-out and fade-in visual effect. In addition, smaller pan movements may be incorporated in the first and second parts of the summary video as extra visual effects.

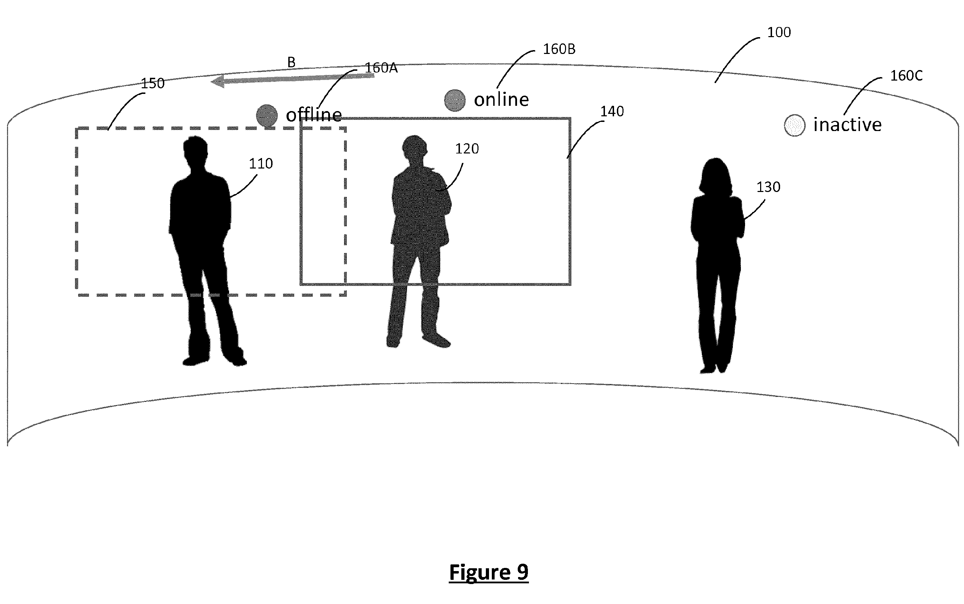

According to an example embodiment, in Figure 9, there is another schematic view of a frame of original panoramic video content, in which a first crop region is selected in received panoramic video content and a pan direction based on relevance indicators is determined. The example illustrated in Figure 9 is similar to the example illustrated in Figure 7 in that a first crop region and a pan direction of the first region are selected and determined based on relevance indicators assigned to each of the detected objects.

As shown in Figure 9, there is provided for each of the detected objects, i.e. the first object 110, the second object 120, and the third object 130, examples of online presence status 160, which indicates an online presence of the object on a social networking/media system (e.g. website, messaging service, etc.), namely whether each of the detected objects is currently online or offline or inactive. As can be seen in Figure 9, the first status 160A (i.e. the status of the first object 110) is "offline", the second status 160B (i.e. the status of the second object 120) is "online", and the third status 160C (i.e. the stats of the third object 130) is "inactive". Other online presence status may be possible, like "away", "busy", "active", "unknown" etc. as an example.

In addition or as an alternative to being based on a database containing identification information of a number of individuals who have personal relationships with the user as described with relation to Figure 6, the relevance indicators (in the form of relevance scores) assigned to each of the detected objects are also determined, calculated, or retrieved based on an online presence status 160, i.e. online/offline status, of each of the detected objects.

According to an example embodiment, if a certain detected object has an online presence status "online", an additional score is added to the person's relevance score based on his/her personal relationship with the user. For example, the second object 120 has a relevance score of 2 according to the database containing identification information of a number of individuals who have personal relationships with the user. However, since the second object 120 is currently "online", as shown in the second status 160B in the area 100, it is assigned with a higher relevance score such that it has priority over any of the detected objects that are not "online". In this case, for the second object 120 to be prioritised, its relevance score is increase from 2 to 6. For the "offline" or "inactive" detected objects, i.e. the first object 110 and the third object 130, the relevance scores remain the same.

Contrasting the examples shown in Figures 7 and 9, the first object 110, the second object 120, and the third object 130 now respectively may have relevance scores of 5, 6, and 3, instead of 5, 2, and 3. In this scenario, a first crop region 140 may be selected so as to only include an object of the highest relevance, i.e. the second object 120. Specifically, the first crop region 140 is selected so as to include a top part of the second object 120, such that a face of the person represented as the second object 120 is included.

In addition, based on positions of each of the detected objects and the relevance scores assigned to each of the detected objects, a pan direction of the selected first crop region 140 may be determined.

As mentioned above, the relevance scores assigned to the first object 110, the second object 120, and the third object 130 are respectively 5, 6, and 3. In this case, it may be preferable to determine the direction such that the first crop region 140 pans from the most relevance object to the least relevance object in the panoramic video content, i.e. from the second object 120 to the first object 110.

The determined pan direction of the selected first crop region 140 may be indicated by arrow B in Figure 9. This first crop region 140 and the determined pan direction may be used for cropping the received panoramic video content so as to create summary content, such as a summary video to be displayed at a mobile device.

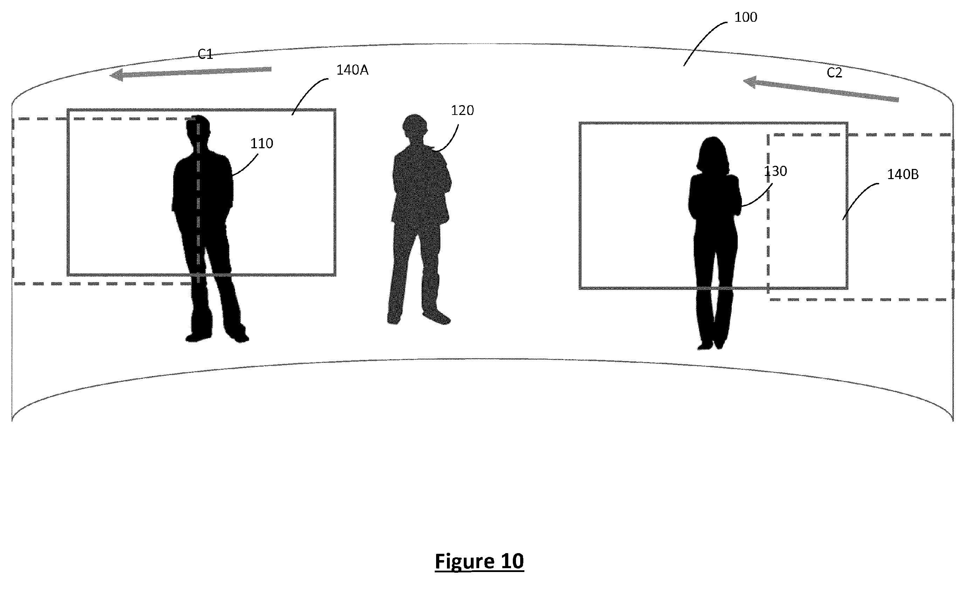

According to an example embodiment, in Figure 10, there is another schematic view of a frame of panoramic video content, in which a first crop region is selected in received panoramic video content and a pan direction based on a blocked object is determined.

The first object 110, the second object 120, and the third object 130 are positioned such that they are spaced apart within the area 100 of the received panoramic video content. In this illustrated example, the second object 120 is a blocked object, which may mean that the person represented by the second object 120 has not provided consent for his image to be reproduced in summary content. In other cases, detected objects may be blocked for other reasons, for example by the person represented by the object or by the user of the mobile device.

In this illustrated example, relevance indicators (in the form of relevance scores) are also assigned to each of the detected objects in the received panoramic video content. The relevance score assigned to each of the detected objects may be determined, calculated, or retrieved based on a database containing identification information of a number of individuals who have personal relationships with the user. In this scenario, the first object 110, the second object 120, and the third object 130 are respectively assigned with the relevance scores of 3, 4, and 2, wherein a higher score indicates a closer relationship with the user of the mobile device.

A first crop region 140 within the area 100 is selected such that it includes an object of the highest relevance score that is not a blocked object, i.e. the first object 110. Specifically, the first crop region 140 is selected so as to include a top part of the first object 110, such that a face of the person represented as the first object 110 is included.

In addition, a pan direction of the selected first crop region 140 is determined based on the positions of each of the detected objects in the panoramic video content, the relevance scores assigned to each of the detected objects, and the presence of any blocked objects.

As mentioned above, the relevance scores assigned to the first object 110, the second object 120, and the third object 130 are respectively 3, 4, and 2. In some cases, it would be preferable to determine the direction such that the first crop region 140 pans from the most relevant object to the least relevant object within the display area 100. In other words, in some cases it would be preferable for the first crop region 140 to pan from the first object 110 to the second object 120 and then to the third object 130.

However, in the present case, since the second object 120 is positioned between the first object 110 and the third object 130 and it is a blocked object, it would be preferable to select a pan direction to pan from the first object 110 towards an edge of the area 100 that is closest to the first object 110, and then from an edge of the area 100 closest to the third object 130 to the third object 130. The determined pan direction is indicated in Figure 10 by the two arrows C1 and C2. This first crop region 140 and the determined pan direction are used for cropping the received panoramic video content so as to create summary content, i.e. a summary video in the present example.

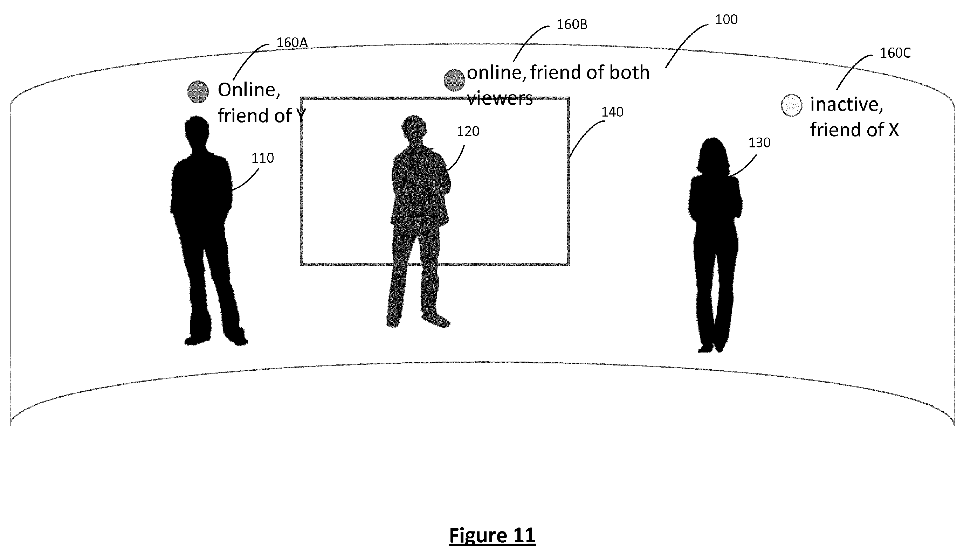

Figure 11 is another schematic view of a frame of panoramic video content, in which a first crop region is selected in received panoramic video content for more than one user of a mobile device.

In the example of Figure 11, there are two users (a first user X and a second user Y) of a mobile device currently logged into a social networking/media system (for example, Facebook) who wish to obtain a summary of a received panoramic video content. The relevance indicators of each of the detected objects are therefore calculated based on the personal relationships between each of the detected objects and both of the users X and Y.

There is provided for each of the detected objects a status indicating online presence status on the social networking/media system and the personal relationship of the respective detected object with at least one of the user. This is illustrated in Figure 11. The first status 160A, i.e. the status of the first object 110, is "online, friend of Y"; the second status 160B, i.e. the status of the second object 120, is "online, friends of both viewers" ("viewers" being equivalent to "users" in this context); and the third status, i.e. the status of the third object 130, is "inactive, friend of X".

In the present example, relevance indicators are assigned to each of the detected objects based on a first database containing identification information of a number of individuals who have personal relationships with the first user X and a second database containing identification information of a number of individuals who have personal relationships with the second user Y. In this illustrated example, relevance indicators are assigned in the format of relevance scores. For example, the second object 120 is "friends of both viewers" and therefore it has a high relevance (by having a combination of relevance scores retrieved from the first database and the second database). The first object 110 is only a friend of the second user Y and not the first user X, and therefore has a relevance score retrieved from the second database. The third object 130 is only a friend the first user X and not the second user Y, and therefore has a relevance score retrieved from the first database.

Also, in addition to being based on the first database and the second database containing identification information of a number of individuals who have personal relationships with the two respective users X and Y, the relevance indicators of each of the detected objects may also be determined, calculated, or retrieved based on an online presence status of each of the detected objects.

In the present example, if a certain detected object has an online presence status, an additional score is added to the person's relevance score based on his/her personal relationship with the two users X and Y.

As described above, the second object 120 in the present example is assigned a combined relevance score of 6 according to the database containing identification information of a number of individuals who have personal relationships with the two users X and Y. Similarly, the first object has a relevance score of 3 according to the database containing identification information of a number of individuals who have personal relationships with the second user Y. Since the first object 110 and the second object 120 have currently online presence status "online", as shown in the first status 160A and the second status 160B in the area 100, the relevance scores respectively assigned to each of the first object 110 and the second object 120 are increased so as to ensure they have priority over any of the detected objects that are offline or inactive. In this case, both the first object 110 and the second object 120 are prioritised, with the second object 120 having an even higher priority (relevance score) since the second object 120 has personal relationships with both users X and Y. For the "offline" or "inactive" detected objects, e.g. the third object 130 in the present example, the relevance score remains the same.

In this scenario, a first crop region 140 is selected so as to only include the most relevant object, i.e. the second object 120. Specifically, the first crop region 140 is selected so as to include a top part of the second object 120, such that a face of the person represented as the second object 120 is included. This first crop region 140 is used for cropping the received panoramic video content so as to create summary content. In this example, summary content is created in the form of a summary video that is suitable for playback at a mobile device.

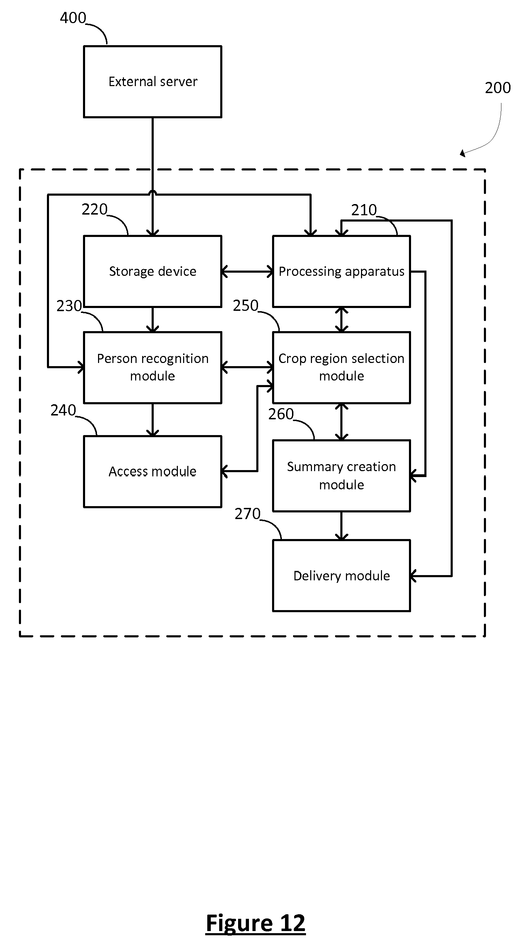

According to an example embodiment, in Figure 12, there is a block diagram of a system operable to create summary content from received panoramic video content.

As shown in Figure 12, the system 200 comprises a processing apparatus 210, a storage device 220, a person recognition module 230, an access module 240, a crop region selection module 250, a summary creation module 260, and a delivery module 270. The system 200 may be implemented on a cloud storage device (not shown in the drawing).

In this exemplary embodiment, the processing apparatus 210 includes hardware for executing instructions, such as those making up a computer program. As an example, to execute instructions, the processing apparatus 210 may retrieve (or fetch) the instructions from an internal register, an internal cache, or the storage device 220, decode and execute them, and then write one or more results to an internal register, an internal cache, or the storage device 220. The processing apparatus 210 is arranged to control the person recognition module 230, the access module 240, the crop region selection module 250, the summary creation module 260, and the delivery module 270 to perform their respective functionalities.

In this exemplary embodiment, the storage device 220 includes main memory for storing instructions for the processing apparatus 210 to operate on. For example, the system 200 may load instructions from the storage device 220 to an internal register or internal cache. To execute the instructions, the processing apparatus 210 may retrieve the instructions from the internal register or internal cache and decode them. During or after execution of the instructions, the processing apparatus 210 may write one or more results (which may be intermediate or final results) to the internal register or internal cache. The processing apparatus 210 may then write one or more of those results to the storage device 220.

In this exemplary embodiment, the storage device 220 is also arranged to store panoramic video content received from an external source. For example, the storage device 220 may be arranged to store panoramic video content downloaded from a external server 400. The storage device 220 includes random access memory (RAM). This RAM may be volatile memory, where appropriate. Where appropriate, this RAM may be dynamic RAM (DRAM) or static RAM (SRAM). The storage device 220 also includes read-only memory (ROM). The ROM may be mask-programmed ROM, programmable ROM (PROM), erasable PROM (EPROM), or flash memory or a combination of two or more of these.

Moreover, the storage device 220 is arranged to store a database containing identification information of at least one user of a mobile device, and information relating to a plurality of individuals that have personal relationships with the user, which allows association of an individual to the user and subsequently assignment of relevance indicators to respective detected objects in the received panoramic video content. The database further contains reference images or other visual features enabling recognition of individuals (objects) from images in received panoramic video content.

In this exemplary embodiment, the person recognition module 230 is arranged to perform visual and depth analysis techniques and/or facial recognition techniques in order to recognise, detect, and tag persons contained within the received panoramic video content. The person recognition module 230 is then arranged to transmit the results of the analysis, which includes positions of the detected objects in the received panoramic video content to the access module 240 for determining whether a detected object should be included in a summary video. The person recognition module 230 is further arranged to assign relevance indicators to each of the detected objects. The relevance indicators may be assigned in the format of relevance scores.

In this exemplary embodiment, the access module 240 is arranged to store authentication information of user(s) and individuals having personal relationships with the user(s), whether individuals contained in the database have given consent to be included in summary content, and whether individuals contained in the database are blocked from being included in summary content. The access module 240 performs consent management and determines whether a detected object has or has not provided consent for his image to be included in summary content. If it is determined that a detected object in the received panoramic video content has not provided consent in this regard or that a detected object in the received panoramic video content is a blocked object, the access module 240 provides instructions to the crop region selection module 250 to perform selection of crop region(s) to avoid including the object representing the individual that has not provided consent or the blocked object.

In this exemplary embodiment, the crop region selection module 250 is arranged to receive results from the person recognition module 230 and receive authentication information from the access module 240. Specifically, in this exemplary embodiment, the crop region selection module 250 receives information regarding detected objects in the received panoramic video content (e.g. positions of each of the detected objects) and instructions from the access module 240 regarding whether a detected object should not be included in a crop region for creating a summary video.

The crop region selection module 250 is further arranged to implement predetermined rules for selecting a crop region and for optionally determining a pan direction of the crop region, based on the received results from the person recognition module 230 and the authentication information from the access module 240.

For example, in one of the examples described above, if it is determined that it is not possible to include all the detected objects in a single crop region, a first crop region is selected to include only the most relevance object (i.e. the object with the highest relevance score). The first crop region may be a spatiotemporal crop region which may be changed or adjusted in a space and time dependent manner.

In this case, the crop region selection module 250 is arranged to implement this particular rule for selecting a crop region in the received panoramic video content. As another example, in one of the other examples described above, if it is determined that any of the detected objects in the received panoramic video content is a blocked object, a first crop region is selected such that it does not include the blocked object. In this case, the crop region selection module 250, on instructions received from the access module 240, performs a selection of the first crop region such that it does not include the blocked object.

In this exemplary embodiment, the summary creation module 260 is arranged to receive the selected crop region(s) from the crop region selection module 250 and optionally a determined pan direction of the selected crop region(s), and to process the received panoramic video content by cropping the received panoramic video content using the selected crop region(s) and determined pan direction to create summary content in a format that is suitable for viewing at a mobile device, i.e. having an aspect ratio and a resolution matching the mobile device at which the created summary content is viewed. In some embodiments, the created summary content may be a summary video.

In this exemplary embodiment, the delivery module 270 includes hardware and/or software providing one or more interfaces for communication between the system 200 and a mobile device 300 (not shown in this drawing). For example, the delivery module 270 may include a network interface controller (NIC) for communicating with an Ethernet or other wire-based network or a wireless network, such as a Wi-Fi network. The system 200 may communicate with an ad hoc network, a personal area network (PAN), a local area network (LAN), a wide area network (WAN), a metropolitan area network (MAN), or one or more portions of the Internet or a combination of two or more of these. The delivery module 270 allows transmission of the summary video from the system 200 to the mobile device 300 such that a user of the mobile device 300 can experience summary content created from the received panoramic video content at the mobile device 300.

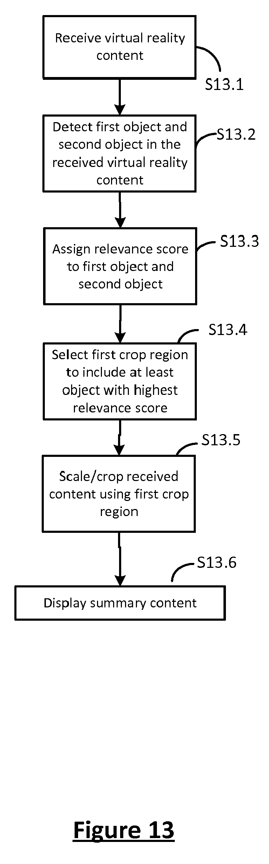

Figure 13 is a flow chart illustrating various operations which may be performed by the system of Figure 12.

The process starts at step 13.1. In this step, panoramic video content is received. The panoramic video content may be received from panoramic video content generator which is arranged to generate panoramic video content using a computer processor and specialised graphics hardware. The received panoramic video content is stored at the storage device 220.

In the subsequent step 13.2, a first object and a second object are detected in the received panoramic video content. Specifically, the person recognition module 230 performs visual and depth analysis techniques and/or facial recognition techniques in order to recognise, detect, and tag persons contained within the received panoramic video content. The results of the analysis, which includes positions of the detected objects in the received panoramic video content, are then transmitted to the access module 240 for determining whether a detected object should be included in a summary video.

After detecting the first object and the second object in the received panoramic video content, relevance indicators are assigned to each of the detected first object and second object in the subsequent step 13.3. In some examples, relevance indicators are assigned in the form of relevance scores as previously discussed. The relevance score assigned to each of the detected objects may be determined, calculated, or retrieved based on a database containing identification information of a number of individuals who have personal relationships with the user. For example, the database may contain a plurality of entries each relating to a family member or friend of the user. The database may contain reference images or other visual features enabling recognition of an individual based on image analysis.

For the purpose of illustrating the feature of relevance score assignment, the first object has the closest personal relationship with the user, e.g. spouse of the user, and therefore is assigned a relevance score of 5 on a scale of 1 to 5, and wherein a higher score indicates a closer relationship with the user of the mobile device. The second object has a moderate personal relationship with the user, e.g. an acquaintance of the user, and therefore is assigned a relevance score of 2.

In the subsequent step 13.4, a first crop region in the received panoramic video content is selected. In this step, results from the person recognition module 230 and authentication information from the access module 240 are first received at the crop region selection module 250 in order to determine whether a detected object should not be included in a crop region for creating summary content. The crop region selection module 250 then implements predetermined rules for selecting a crop region and for optionally determining a pan direction of the crop region, based on the received results from the person recognition module 240 and the authentication information from the access module 240.

For example, in one of the examples described above, if it is determined that it is not possible to include all the detected objects in a single crop region, a first crop region is selected to include only the object with the highest relevance score. In this case, the crop region selection module 250 implements this particular rule for selecting a crop region in the received panoramic video content. As another example, in one of the other examples described above, if it is determined that any of the detected objects in the received panoramic video content is a blocked object, a first crop region is selected such that it does not include the blocked object. In this case, the crop region selection module 250, on instructions received from the access module 240, performs a selection of the first crop region such that it does not include the blocked object.

After the first crop region is selected, the method proceeds to step 13.5 in which the first crop region is used for cropping the received panoramic video content to create summary content, in the form of a summary video. In this step, the summary creation module 260 receives the first crop region from the crop region selection module 250 and process the received panoramic video content by cropping the received panoramic video content using the selected crop region to create a summary video in a format that is suitable for viewing at a mobile device, i.e. having an aspect ratio and a resolution matching the mobile device at which the summary video is viewed. For example, the resulting summary video may have an aspect ratio of 4:3 and a resolution of 320*240 such that it matches the aspect ratio and the resolution of the mobile device.

The created summary video from step 13.5 is then transmitted to a mobile device in a subsequent step 13.6 by the delivery module 270 such that a user of the mobile device 300 can experience a summary of the received panoramic video content via the summary video at the mobile device 300.

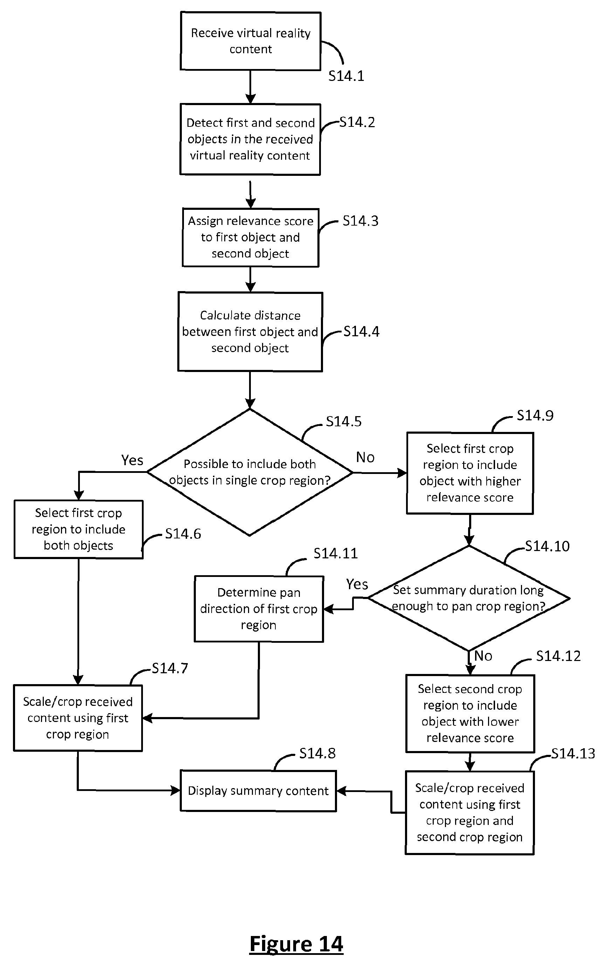

Figure 14 is another flow chart illustrating various operations which may be performed by the system of Figure 12.

The process starts at step 14.1. In this step, panoramic video content is received. The panoramic video content may be received from virtual reality content generator which is arranged to generate virtual reality content using a computer processor and specialised graphics hardware, as previously discussed. The received panoramic video content is stored at the storage device 220.

In the subsequent step 14.2, a first object and a second object is detected in the received panoramic video content. Specifically, the person recognition module 230 performs visual and depth analysis techniques and/or facial recognition techniques in order to recognise, detect, and tag persons contained within the received panoramic video content. The results of the analysis, which includes positions of the detected objects in the received panoramic video content, are then transmitted to the access module 240 for determining whether a detected object should be included in a summary video.

After detecting the first object and the second object in the received panoramic video content, relevance indicators are assigned to each of the detected first object and second object in the subsequent step 14.3. In some embodiments, relevance indicators are assigned in the form of relevance scores. The relevance score assigned to each of the detected objects may be determined, calculated, or retrieved based on a database containing identification information of a number of individuals who have personal relationships with the user. For example, the database may contain a plurality of entries each relating to a family member or friend of the user. The database may contain reference images or other visual features enabling recognition of an individual based on image analysis.

For the purpose of illustrating the feature of relevance score assignment, the first object has the closest personal relationship with the user, e.g. spouse of the user, and therefore is assigned a relevance score of 5 on a scale of 1 to 5, wherein a higher score indicates a closer relationship with the user of the mobile device. The second object has a moderate personal relationship with the user, e.g. an acquaintance of the user, and therefore is assigned a relevance score of 2.

The method then proceeds to step 14.4 in which a distance between the first object and the second object in the received panoramic video content is calculated, and in the subsequent step 14.5 this calculated distance is compared against dimensions of a single crop region so as to determine whether it is possible to include both objects in a single crop region.

If it is determined in step 14.5 that it is possible to include both objects in a single crop region, the system 200 proceeds to step 14.6 in which the crop region selection module 250 performs selection of a first crop region so as to include the first object and the second object.

After a first crop region is selected in step 14.6, the method proceeds to step 14.7 in which the first crop region is used for cropping the received panoramic video content to create summary content, in the form of a summary video. In this step, the summary creation module 260 receives the first crop region from the crop region selection module 250 and process the received panoramic video content by cropping the received panoramic video content using the selected crop region to create a summary video in a format that is suitable for viewing at a mobile device, i.e. having an aspect ratio and a resolution matching the mobile device at which the summary video is viewed. For example, the resulting summary video may have an aspect ratio of 4:3 and a resolution of 320*240 such that it matches the aspect ratio and the resolution of the mobile device.

However, if, in step 14.5, it is determined that it is not possible to include both objects in a single crop region, the system 200 proceeds to step 14.9 in which the crop region selection module 250 performs selection of a first crop region so as to include the object with the higher relevance score. As mentioned above, the first object is assigned a relevance score of 5 while the second object is assigned a relevance score of 2. Therefore, in this case, the first region is selected so as to only include the first object.

After a first crop region is selected in step 14.9, the method proceeds to step 14.10 in which it is determined whether a set duration for summary content is long enough to pan the selected first crop region. This duration may be set by a user of a mobile device at which the summary content is viewed. Alternatively, this duration may be pre-set by the processing apparatus 210 in the system 200.

If it is determined in step 14.10 that the set duration is long enough to pan the selected first crop region, the system 200 proceeds to step 14.11 in which a pan direction of the first crop region is determined. In this case, a pan direction is selected such that the first crop region pans from the object having the highest score to the object having the lowest score, i.e. from the first object to the second object.

After a first crop region is selected in step 14.9 and a pan direction is determined in step 14.10, the method proceeds to step 14.7 in which the first crop region, along with the determined pan direction, are used for cropping the received panoramic video content to create a summary video. In this step, the summary creation module 260 receives the first crop region and the determined pan direction from the crop region selection module 250 and process the received panoramic video content by cropping the received panoramic video content using the selected crop region and panning the summary video using the determined pan direction to create a summary video in a format that is suitable for viewing at a mobile device, i.e. having an aspect ratio and a resolution matching the mobile device at which the summary video is viewed.

However, if, in step 14.10, it is determined that the set duration is not long enough to pan the selected first crop region, the system 200 proceeds to step 14.12 in which the crop region selection module 250 performs selection of a second crop region so as to include the object with the lower relevance score. In this case, the second region is selected so as to only include the second object.

After a second crop region is selected in step 14.12, the method proceeds to step 14.13 in which both the first crop region and the second crop region are used for cropping the received panoramic video content to create a summary video. In this step, the summary creation module 260 receives the first crop region and the second crop region from the crop region selection module 250 and process the received panoramic video content by cropping the received panoramic video content using the selected crop regions to create a summary video in a format that is suitable for viewing at a mobile device, i.e. having an aspect ratio and a resolution matching the mobile device at which the summary video is viewed. Since two different crop regions are used in this scenario, visual effects such as fade-out fade-in may be added in the transition from the first crop region to the second crop region in the resultant summary video.

The summary video created in step 14.7 or step 14.13 is then transmitted to a mobile device in a subsequent step 14.8 by the delivery module 270 such that a user of the mobile device 300 can experience a summary of the received panoramic video content via the summary video at the mobile device 300.

It will be appreciated that the plurality of examples described above may be combined in a number of ways in some embodiments.

In any of the examples as described above, the first crop region and/or the second crop region may be a crop region which may be changed or adjusted in a space and time dependent manner.

In alternative embodiments, as an alternative or in addition to using visual and depth analysis techniques and/or facial recognition techniques, objects and/or persons included in the received panoramic video content may be detected or recognised using positioning techniques, e.g. GPS, indoor position, etc. Such positioning techniques can provide positions of objects and/or persons included in the received panoramic video content.

For example, by using position and/or orientation of an image capturing device (e.g. video camera with panoramic video capabilities) which was used for capturing the panoramic video content, and position(s) and or orientation(s) of objects and/or persons included in the received panoramic video content, the objects and/or persons included in the receive panoramic video content may be detected and identified. In other words, the positions and/or orientations of the image capturing device and the objects and/or persons around the image capturing device may be obtained using positioning techniques. From the obtained position and/or orientation information, directions of objects and/or persons with respect to the image capturing device may be determined. This provides an indication of a region in the received panoramic video content where objects and/or persons may be found. Optionally, in these alternative embodiments, a portion of the receive panoramic video content that is near where objects and/or persons may be found as indicated by positioning technique may be further analysed so as to determine whether a visual object can be detected. For example, if a person is supposed to be near a certain portion of the received panoramic video content, as indicated by using positioning techniques, that certain portion can be analysed to identify a person shape or a face shape.

In alternative embodiments, the system may be further arranged to receive textual content relating to at least one of the objects included in the received panoramic video content. In these alternative embodiments, the summary content may contain the text content such that when the object is displayed, the text content relating to the displayed object is also displayed. Moreover, in these alternative embodiments, comments contained in the summary content may be updated depending on which detected object is currently displayed.

In alternative embodiments, the received panoramic video content may comprise only a single first object. In these alternative embodiments, the first object may be detected in the same manner as described above (e.g. using facial recognition techniques). In these alternative embodiments, the first crop region may be selected based on a relevance indicator assigned to the first object. Also, in these alternative embodiments, summary content may be created by selecting temporal segments of the received panoramic video using the first crop region. Alternatively, summary content may be created by selecting segments of a plurality of received panoramic videos using the first crop region.

Although it is described above that the received panoramic video content is cropped using the first crop region such that the resulting summary content has an aspect ratio and resolution matching a mobile device, in alternative embodiments the received panoramic video content may be scaled in addition to being cropped, using the first crop region.

Although it is described above that the received panoramic video content is cropped using the first crop region such that the resulting summary content has an aspect ratio and resolution matching a mobile device, it will be appreciated that in alternative embodiments the panoramic video may not be necessarily cropped to have an exact match of aspect ratio and/or resolution to a mobile device. In these alternative embodiments, the received panoramic video content may be cropped to have an aspect ratio and/or resolution that are suitable for a mobile device. Also, in some of these alternative embodiments, the resolution of the received panoramic video content may remain unchanged.

Although in some examples described above, the online presence statuses of each of the detected objects are shown in the area of the received panoramic video content, in alternative embodiments these online presence statuses may be hidden.

Although in some examples described above, relevance indicators are assigned in the format of relevance scores, in alternative embodiments other types or formats of relevance indicators may be used for indicating a relevance of a detected object in a panoramic video content to a user of a mobile device. For example, relevance indicators may be assigned in terms of a ranking system.

In alternative embodiments, relevance indicators may be adjusted based on an interaction or a frequency of an interaction on a social networking/media system between the detected object in the received panoramic object and the user of the mobile device. For example, the relevance indicator assigned to the detected object may be adjusted such that it has a higher relevance, if the detected object has previously had an online chat conversation on a social networking/media system with the user.

In alternative embodiments, the method of adjusting relevance indicators according to an online presence of a detected object may be different from what is described above. For example, in some alternative embodiments, the relevance score(s) may be adjusted by lowering a relevance score for a certain detected object if the that object is in an offline or inactive status, in addition to or as an alternative to adjusting the relevance score by increasing a relevance score for a detected object with an online status.

Although it is described above that when there are two users of a mobile device, the relevance score of a detected object is based on a first database containing identification information of a number of individuals who have personal relationships with the first user and a second database containing identification information of a number of individuals who have personal relationships with the second user, in alternative embodiments, the identification information of a number of individuals who have personal relationships with the first user and the identification information of a number of individuals who have personal relationships with the second user may be stored in a single database.

Although it is described in some examples above that the first crop region is selected to include at least an object of the highest relevance, in alternative embodiments the first crop region may be selected using a different process which is also based on assigned relevance indicator(s).

In alternative embodiments, the storage device may be external to the system where appropriate.

The processing apparatus 210 may be a programmable processor that interprets computer program instructions and processes data. The processing apparatus 210 may include plural programmable processors. Alternatively, the processing apparatus 210 for example, programmable hardware with embedded firmware. The processing apparatus 210 may be termed processing means. The processing apparatus 210 may alternatively or additionally include one or more Application Specific Integrated Circuits (ASICs). In some instances, the processing apparatus 210 may be referred to as computing apparatus.

The storage device 220 may comprise a single memory unit or a plurality of memory units, upon which computer readable instructions (or code) are stored. For example, the storage device 220 may comprise both volatile memory and non-volatile memory. For example, computer readable instructions may be stored in the non-volatile memory and may be executed by the processing apparatus 210 using the volatile memory for temporary storage of data or data and instructions. Examples of volatile memory include RAM, DRAM, and SDRAM etc. Examples of non-volatile memory include ROM, PROM, EEPOM, flash memory, optical storage, magnetic storage, etc. The memories in general may be referred to as non-transitory computer readable memory media.

The term 'storage device', in addition to covering memory comprising both non-volatile memory and volatile memory, may also cover one or more volatile memories only, one or more non-volatile memories only, or one or more volatile memories and one or more non-volatile memories.

Examples of methods described herein may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing apparatus" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

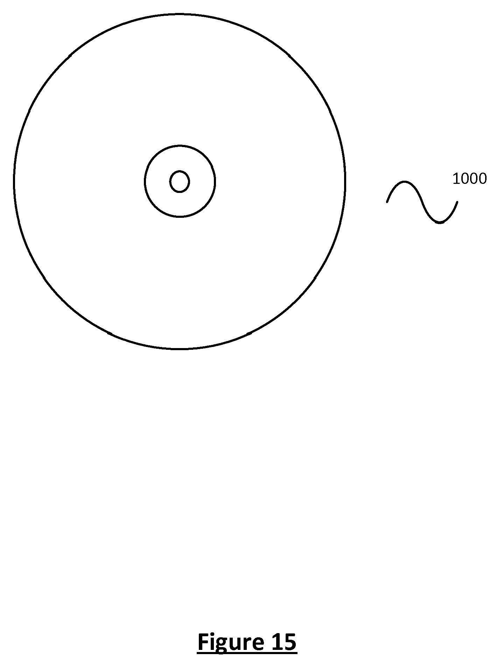

Computer readable instructions may arrive at the processing apparatus 210 via an electromagnetic carrier signal or may be copied from a physical entity 1000 (see Figure 15) such as a computer program product, a memory device or a record medium such as a CD-ROM or DVD. The computer readable instructions may provide the logic and routines that enables the processing apparatus 210 to perform the functionality described above.

If desired, the different steps discussed herein may be performed in a different order and/or concurrently with each other. Furthermore, if desired, one or more of the above-described steps may be optional or may be combined.

Although various aspects of the present disclosure are set out in the independent claims, other aspects of the present disclosure comprise other combinations of features from the described embodiments and/or the dependent claims with the features of the independent claims, and not solely the combinations explicitly set out in the claims.

Like reference numerals refer to like elements throughout. As used herein, the terms "data", "content", "information" and similar terms may be used interchangeably to refer to data capable of being transmitted, received and/or stored in accordance with examples described herein. Thus, use of any such terms should not be taken to limit the scope of the present invention.

It is also noted herein that while the above describes various examples, these descriptions should not be viewed in a limiting sense. Rather, there are several variations and modifications which may be made without departing from the scope of the present invention as defined in the appended claims.

## Claims

1. A method comprising:
receiving panoramic video content comprising at least a first object and a second object;
detecting the first object and the second object in the received panoramic video content;
selecting a first crop region in the received panoramic video content based on an assigned relevance indicator, the relevance indicator being indicative of a relevance of a respective object to a user; and
cropping the received panoramic video content using the first crop region to create summary content.

2. The method of claim 1, wherein the first crop region is selected based on an assigned relevance indicator such that the first crop region includes at least part of the object of the highest relevance.

3. The method of claim 1 or claim 2, wherein the first object is a person and the second object is a person, and detecting the first object and the second object comprises identifying a person using facial recognition.

4. The method of claim 3, wherein relevance indicator of a respective object is assigned based on at least one of: a relationship of the person to the user and an online presence status of the person on a social networking/media system.

5. The method of any of the preceding claims, wherein the first crop region comprises an aspect ratio matching a mobile device.

6. The method of any of the preceding claims, further comprising the steps of:
calculating a distance between the first object and the second object in the received panoramic video content;
determining whether it is possible to include the first object and the second object in the first crop region based on the distance between the first object and the second object; wherein
if it is possible to include both objects in the first crop region, the selecting of the first crop region comprises selecting the first crop region including both objects; and
if it is not possible to include both objects in the first crop region, the selecting of the first crop region comprises selecting the first crop region including the object having a higher relevance.

7. The method of claim 6, further comprising: wherein if it is not possible to include both objects in the first crop region, selecting a second crop region including the object having a lower relevance, and cropping the received content first using the first region and then the second crop region, so as to create the summary content.

8. The method of any of the preceding claims, wherein the received panoramic video content comprises a third object, and the method further comprises detecting the third object in the received panoramic video content.

9. The method of claim 8, further comprising determining a pan direction based on relevance indicators assigned to the first, second, and third objects,
wherein the cropping of the received content comprises moving the first crop region in the determined pan direction to create the summary content.

10. The method of claim 8, further comprising:
setting a duration of the summary content prior to selecting the first crop region;
determining whether it is possible to include all detected objects in the received panoramic video content in a single crop region; and
if it is possible to include all detected objects in a single crop region, select the first crop region in the received panoramic video content including all detected objects;
if it is not possible to include all detected objects in a single crop region, select the first crop region in the received panoramic video content including the object of the highest relevance, select a second crop region in the received panoramic video content including the object of the second highest relevance, and cropping the received panoramic video content using the first crop region and then the second crop region to create the summary content.

11. The method of any of the preceding claims, further comprising:
determining that at least one of the objects included in the received panoramic video content is a blocked object;
wherein the first crop region is selected such that it does not include the blocked object.

12. The method of any of the preceding claims, further comprising displaying the summary content at a mobile device.

13. The method of claim 12, further comprising:
receiving textual content relating to at least one of the objects included in the received panoramic video content;
wherein displaying the summary video further comprises displaying the text content relating to the at least one of the objects when the object is displayed.

14. Computer-readable instructions which when executed by computing apparatus cause the computing apparatus to perform a method as claims in any of claims 1 to 13.

15. Apparatus comprising:
at least one processor and
at least one memory including computer program code, which when executed by the at least one processor, causes the apparatus to perform the method according to any of claims 1 to 13.
